# EUROPEAN PATENT APPLICATION

(11) **EP 1 314 578 A1**
(43) Date of publication of application: **28.05.2003**
(21) Application number: 01204582.9
(22) Date of filing: 27.11.2001
(51) Int. Cl.: B44C 1/17

(54) **Marking only with ink for decorative labelling**

(71) Applicant: HEINEKEN TECHNICAL SERVICES B.V., 1017 ZD Amsterdam (NL)
(72) Inventor: Kwint, Huibert Cornelis, 3448 EC Woerden (NL); Blom, Patrick Johannes, 2321 EZ Leiden (NL)
(74) Representative: Prins, Adrianus Willem

(57) **Abstract**

The invention relates to a process for providing a graphic, decorative label on articles, for example glass articles such as bottles or plastic articles, as well as to articles obtainable by such a process. Furthermore, the invention relates to an ink composition, which may be used in said process to produce said d graphic, decorative labels.

According to the invention an ink composition comprising at least one binder is transferred to a carrier sheet, thus forming a pattern. This is followed by a step wherein the ink composition is transferred from the sheet to the article, whereby the decoration is formed.

## Description

The invention relates to a process for providing a graphic, decorative label on articles such as plastic articles or glass articles, as well as to articles obtainable by such a process. Furthermore, the invention relates to an ink composition, which may be used in said process to produce said graphic, decorative labels.

Containers (such as bottles) and other articles (such as plastic crates) are often provided with a decorative label, *viz*. an applied layer of some sort providing a graphic image for decorative and/or informational purposes. In the art, several techniques for providing such a decorative label are known. The most common method comprises gluing paper labels to the article, particularly glass articles. However, in the past more sophisticated methods have been developed for producing decorative labels on articles reliably, in particular at a high speed.

WO-A-97/34810 describes a method wherein labels are printed on plastic crates by transferring the label ink present on a substrate to the crate's surface. This process is known in the art as a transfer printing process. The use of an adhesive, which may be activated by applying heat, is required in this method.

WO-A-97/35292 and WO-A-97/35291 also describe transfer printing of what is referred to in these publications as an ink-only label. The label described in this publication is easily removable by soaking in water and consists of an adhesive layer, an ink-only image layer and optionally a protective layer.

The transfer printing process is also used in WO-A-01/15915 to provide a transfer label that is opaque, and can be applied over preexisting permanent printed images on substrate surfaces

All of the above-mentioned prior art techniques require the presence of an adhesive, which is in the form of a separate layer. Furthermore, these known labels usually need to be covered with a protective layer.

Another approach is to print ceramic or organic ink directly on the article's surface using the screen printing technique. Although by screen printing a graphic decorative label of good quality may be obtained, this process is not suitable for high speed printing of large quantities of articles, because it requires the pressing of the ink composition through the screen, while at the same time careful positioning of the screen with respect to the article (which may have an irregular shape) is required. Furthermore, if a more complex graphic decorative label is required, *e.g.* composed of different colors, this requires several printing passes, each of which must be carefully synchronized with each other, which makes this technique even less suitable for providing graphic decorative labels on articles on an industrial scale. When ceramic ink is used in screen printing, this technique can only be successfully applied on glass substrates, since it requires the subsequent heating of the ink at a temperature of 400°C or higher in order to melt the ceramic ink and obtain the decoration. Moreover, heating the articles to a temperature that is sufficient to melt the ceramic ink is not always possible. For example, if the articles to be printed are filled food containers, the heating required for melting the ceramic ink could destroy the contents.

It is an object of the present invention to provide a process for applying a graphic, decorative label to the surface of an article, which process at least in part overcomes the above-mentioned disadvantages of the prior art methods. The application of the decoration should be relatively simple, *i.e.,* requiring a minimum number of steps, preferably only a single step. Furthermore, the process must be such that high speed operation is possible. At the same time, the decorated product obtainable by this process should have physicochemical properties which may be modified as to assure problem-free subsequent processing and/or handling of the decorated article, even under more severe conditions, such as when the decorated articles are heated and/or contacted with water. Also, the process should enable the production of decorative labels having a desirable appearance (including resolution, color space (*i.e*., use of the color spectrum) and texture) on all types of articles, including glass and plastic surfaces.

It has been found that this object can be met by a transfer printing process wherein the graphic, decorative label is transferred from a carrier to the articles, wherein the composition of the ink used for obtaining the decorative label is chosen such that it fulfils all desired functions of the label. Therefore, in a first aspect, the present invention is directed to a process for providing a graphic, decorative label to an article, wherein an ink composition comprising at least one polymeric binder is transferred to a carrier sheet, thus forming a pattern, followed by a step wherein said ink composition is transferred from said sheet to said article, whereby a decoration is formed.

By the process of the invention all functions of the decoration (including decorative/information, scratch resistance, adhesion, *etc.*) are obtained by choosing the ink composition, in particular by including a binder therein. For this reason this method is referred to as ink-only decoration. The ink-only decoration thus essentially consist of a composition which combines all the above-mentioned functions. The presence of a separate adhesive layer, coating layer and/or multiple intermediate layers is thus no longer required, which is a distinct advantage over the prior art methods. Consequently, according to the present invention a graphic, decorative label may be applied in a relative simple operation, the transfer of the label in its final form requiring only a simple step.

The process of the invention may be carried out using a wide variety of ink compositions, both organic and inorganic based. This is a distinct advantage over screen printing processes, which usually require ceramic (inorganic) ink composition, often supplemented with heavy metals.

Another advantage when compared with conventional heat transfer printing processes is that less material is required to form the decoration. The prior art heat transfer processes require an adhesive layer and/or protective layer, which layers usually extends beyond the surface of the decoration itself. In many cases the decoration is even entirely covered by a protective layer in these prior art processes. According to the present invention, however, the ink composition is only deposited on the article's surface there where it is needed, the non-covered areas remaining in their original state and keeping their original appearance. Since no ink is used for the non-printed areas, and also no adhesive and/or protective layer material, this results in a considerable saving of material.

The decorative labels which may be obtained by the present invention are characterized by a sharp definition, *viz*. there is a very sharp contrast between printed areas and non-printed areas. In particular the non-printed areas directly show the surface of the articles and there are no hazy regions or rims which typically occur in decorations obtained by prior art printing techniques, which use a protective layer. In the prior art techniques the protective layer is usually applied such that it extends at the edges of the decoration somewhat beyond the areas covered by the decoration and thus covers a part of the non-decorated surface as well. Although the coating material used in the prior art techniques is of course as transparent as possible, it is clearly visible, particularly at the rims of the decoration, which thus seriously detracts from the appearance of the decoration.

For the step of transferring the ink composition to the carrier sheet, by which a pattern is formed (the pattern being the negative of the final decoration), in principle any printing process or other method of application may be employed, such as screen-printing or gravure printing processes. Preferably a rotogravure printing process is used. By the rotogravure printing process high printing speeds may be obtained.

Several subsequent printing steps may be used (wherein each step may be followed by a drying step, if desired) for example to obtain a pattern and a corresponding decoration composed of different colors and/or textures. The patterns can be printed in a very high resolution, in particular when the rotogravure printing process is used and a very wide color space can be achieved.

The carrier sheet may be made from any suitable material. Examples of suitable materials are poly(ethylene-terephthalate) (PET), (oriented) polypropylene ((O)PP), polyethylene (PE), polystyrene (PS), paper or laminates thereof. Also other polymers based on these mentioned may be used. The carrier sheet may have any suitable thickness, which is typically from several tens to hundreds of µm.

Preferably the carrier sheet is, prior to the application of the ink pattern, provided with a release promoting layer, *viz*. any coating that improves the transfer of the decoration from the carrier to the article.

It is preferred to print the release promoting layer in register with, *viz*. following the contours of, the decoration in order to prevent that after the transfer of the decoration to the article, parts of the promoting agent appear on the article's surface, which in particular in the case of glass articles may leave visible marks. Such marks may of course be removed easily by subsequent cleaning, it is however preferred not to have these marks formed to begin with.

The release promoting action may, in case the transfer is *e.g.* effected by applying heat, be caused by melting, which occurs with compounds such as wax, more specifically a carnauba and/or a montan wax, or a mixture thereof. Also suitable as a release promoting compounds for use in this layer are non-melting release coatings, such as silicone. A very suitable commercially obtainable wax compound for this purpose is Michem™ Lube 156.

The carrier sheet bearing the decoration may subsequently, either directly or after having been stored for some time, be transferred to the apparatus where the transfer of the decoration to the article, thus forming the final decoration, is carried out.

According to the invention, the sheet with the precursor of the decoration is contacted with the article to be decorated, for example by employing the transfer printing process described WO-A-97/34810, WO-A-97/35292, WO-A-97/35291 and WO-A-01/15915, the contents of which publications are enclosed herein by reference. In this step the decoration is contacted with the article at a certain temperature and pressure for a certain contact time. Apart from heat activated transfer, the transfer of the decoration may also be activated by applying pressure, by the application of radiation (UV, IR or microwave) or by contact with water (water-activated).

After the decoration has been applied to the article, it may optionally be subjected to a heating step. This final heating step, which is preferably applied when providing a graphic, decorative label on a glass article, is generally carried out at a temperature of 50 to 250°C.

The adhesion of the ink composition used in producing the decorations according to the present invention, as well as the mechanical properties of the decoration itself may be controlled by choosing suitable ink compositions and applying suitable conditions during the printing and transfer processes. In this way a decoration with a good scratch resistance may be obtained. Furthermore, decorations may be provided, the mechanical and chemical properties of which may be modified such that an improved scratch resistance can be obtained even under more severe conditions, such as under elevated temperature, which may in practice occur *e.g.* when the article is subjected to a pasteurization step. Similarly, the tackiness, or rather the lack thereof, of the decoration may be controlled by selecting the proper composition of the ink. It was furthermore found that in some cases, in particular when the substrate is plastic, cross-linking of polymers in the ink is not always required to obtain a decoration which meets the above-mentioned requirements regarding scratch resistance and tackiness. The compositions used in the present invention may thus essentially be free of cross-linkers, such as melamine, although this is no requirement.

The composition of the ink may vary widely and may be water based or based on an organic solvent. The key component of the ink composition is the binder, which is typically a thermoplastic polymer. In principle, any suitable binder may be used, such as binders based on acrylic polymers, melamine-formaldehyde, natural rubber, nitrocellulose, phenolic resin, polyacrylate, polysulfide, polyurethane, polyvinyl and ethylene-vinyl acetates, polyvinylbutyral, polyvinylchloride, resorcinol, saturated or unsaturated polyesters, silicone, urea-formaldehyde or mixtures thereof.

The choice of the composition depends primarily on the type of surface to be decorated.

In case plastic articles, such as crates, are to be provided with a graphic decorative label in accordance with the present invention, a suitable binder is *e.g.* a polyurethane binder.

The present invention is particularly useful for applying the labels to glass surface. In general, glass surfaces are more difficult to label than other surfaces, due to the inert character of glass. In addition, glass articles such as bottles, are usually subjected to severe processing conditions, which involve scuffing and/or contact with water at elevated temperature. It is surprising that according to the invention glass surfaces, particularly bottles, may be provided with a label having the desired functionality with respect to scratch resistance.

Particularly suitable binders for labeling glass surfaces in accordance with the present invention (but not limited thereto) are (co)polyester and/or phenoxy based binders. The copolyester is a copolymer of different polyester monomers (either random, block or alternating). Typically the binder for use on glass surfaces has a glass transition temperature (Tg) of 25 to 100°C, preferably from 35 to 95°C, more preferably from 40 to 90°C. Compounds having Tg values above 100°C corresponding to higher molecular weight compounds, may become brittle and thus more difficult to process as ink. Compounds having a Tg below 25°C do usually not result in a desired scratch resistance.

The preparation of an ink composition typically involves the following steps.
a. Preparation of a 'vehicle' or extender, choosing a polymeric binder (*e.g.* a polyester) and dissolving the binder in a suitable solvent. The amount of solvent is typically 70-80 wt.%.
b. Addition of ink pigments ('colorants') to the vehicle or extender. The ratio pigment:binder is typically 2:1 to 3:1 for inorganic pigments (*e*.*g*. titanium white, TiO₂). After addition of the pigment, the composition is mixed, *e.g.* by grounding in a three-roll mill or a shot mill. Typically, the solid distribution is 75% pigments to 25% binder. The solvent content will usually drop to 25-35% wt.% after addition of the pigments. The ratios pigment:binder when organic pigments, such as carbon black are used, are generally the opposite of those for inorganic: *ca*. 1:2 to 1:3.
c. Addition of solvent to reach the proper viscosity for printing. The solvent content may thus be increased from 25-35 wt.% to 65-75 wt.%. When water is used, the solvent content is generally somewhat lower at this stage, typically 25-50 wt.%.
d. Extender can be added separately to adjust the pigment:binder ratio or to improve adhesion.

When glass surfaces are to be provided with a graphic, decorative label in accordance with the present invention, it is preferred to provide a precoat on the glass surface in order to improve the scratch resistance. Suitable for this purpose are *eg*.. aminosilane compounds, which are generally water soluble, or epoxysilane compounds (such as gamma-glycidoxypropyl-trimethoxysilane, commercially obtainable *e.g.* as A-187 from OSI Specialties/Crompton NV, Zwijndrecht, Belgium), which are generally soluble in alcohol. The aminosilane compounds are preferred for this purpose. Suitable aminosilane compounds are *e.g.* A-1100 (gamma-aminopropyltriethoxysilane, from OSI Specialties/Crompton NV) and Dynasylan™ HS 2776 (from Degussa-Huels AG, Hanau, Germany, which comprises 30% alkylpolysiloxanes, aminomodfified in water).

Very suitable commercially available polyester compounds which may be used as a binder in accordance with the present invention, in particular for decorating glass surfaces are Dinapol™ (manufactured by Creanova Inc, Somerset, NJ, US) and Vitel™ (manufactured by Bostik, Middleton, MA, US). Particularly preferred are Dinapol™ S-1606 and Dinapol™ S-1611, or mixtures thereof.

Other suitable binders are phenoxy resins, preferably in combination with the above-mentioned polyester compounds. Phenoxy resins having a molecular weight of about 45000 to 55000 and a Tg of about 88 to 92°C are particularly suitable. Commercially available phenoxy resins which are suitable as a binder according to the present invention is Phenoxy PKHH™ (manufactured by Phenoxy Specialties, Rock Hill, SC, US).

Other suitable binders, to be used alone or in combination with those already mentioned are vinyl based polymeric resins, such as vinyl chloride/vinyl acetate copolymers. Commercially available vinyl based resins which are suitable as a binder according to the present invention are VAGH™ and VROH™ (manufactured by Union Carbide, Danbury, CT, US).

The ink composition according to the present invention may further comprise one or more plasticizers, the solvent and/or one or more pigments. Furthermore, additives such as resin forming compounds (*e.g.* melamine formaldehyde resin) optionally in combination with crosslinking compounds (*e.g.* Resamine™797, manufactured by Solutia Inc., St. Louis, MO, US) may be present. Other additives are catalysts to start the crosslinking reaction (such as the acid catalyst sulfonic acid/amine salts, *e.g.* obtainable as Cycat™ 4045 and K-cure™ 1040) and/or plasticizers, such as glyceryl tribenzoate (*e.g.* Uniplex 260).

The process of the invention provides articles with a graphic, decorative label in a relatively simple method, requiring only a very limited number of steps. The decorations of the invention can be applied such that a high scratch resistance of the decoration is obtained, even when contacted with water at elevated temperatures (*e.g.* 65°C). This is surprising, since the presence of a curing agent (which term is normally used for compounds such as melamine, which cause cross-linking of the polymeric resin) is not required.

According to the invention, decorations of virtually any color combination can be obtained in a high resolution. Moreover, the texture of the decorations can be carefully controlled. The control of texture is particularly relevant for decorations on containers of certain food products, such as beer bottles, wherein the look and feel of the container adds considerably to consumer appreciation. Since the definition of the decorations is very sharp (*viz*. the decorations are characterized by a sharp contrast between regions having no ink and regions with ink), decorations according to the present invention having a thickness of about 15 µm or more are generally tangible. Preferred thicknesses range from 5 µm upwards, depending on the desired appearance.

The decorations produced by the invention comprise the binder and the other additives insofar these are present in the ink composition. The decoration will be essentially free of the solvent, which evaporates after application.

### Examples

The types of ingredients and their proportions used to prepare the ink compositions from Examples 1-23 are given in Table 1 below. Details on the ingredients used are given in Table 2 hereinbelow.

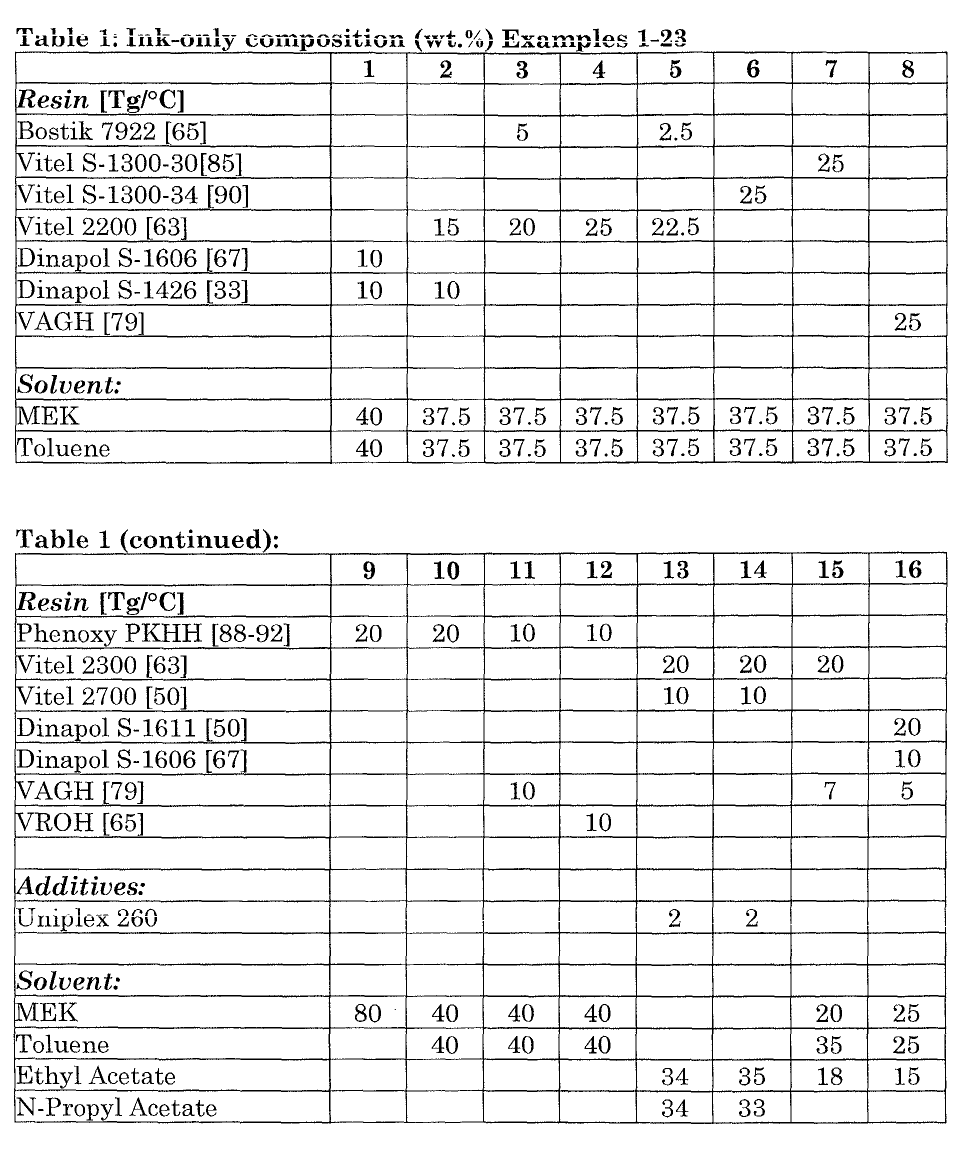

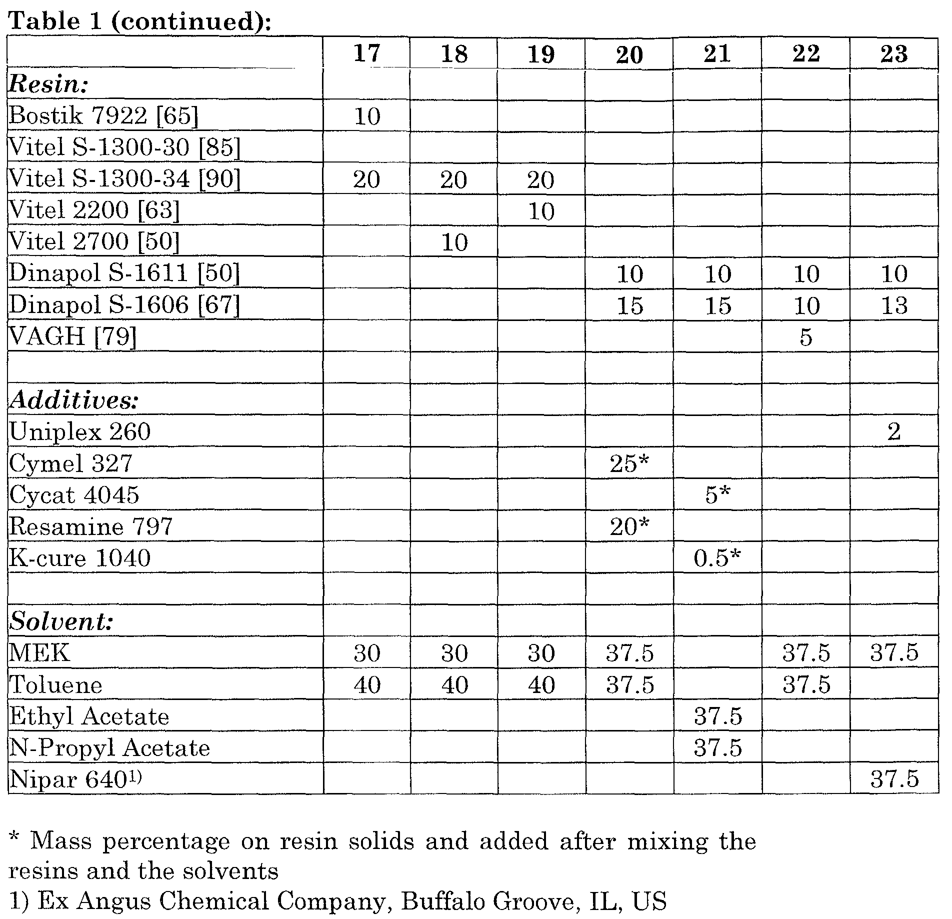

The ink compositions where subsequently transferred to a PET film in a predefined pattern by rotogravure printing to form a decoration.

After drying of the decorations on the PET film the decorations where transferred to a standard soda-lime-silica container glass substrate to provide a graphic, decorative label thereon.

**Table 2:**

| **Description of ingredients used** | |
|---|---|
| **Product name** | **Description** |
| Bostik 7922, Vitel S-1300-30, Vitel S-1300-34, Vitel 2200, Vitel 2250, Vitel 2300, Vitel 2700¹⁾ | Amorphous, linear saturated polyester resins with grades, differing in Tg (values are given in Table 1). |
| Dinapol S-1611, Dinapol S-1606, Dinapol S-1426²⁾ | Amorphous saturated and linear copolyesters. (Tg values are given in Table 1). |
| Phenoxy PKHH³⁾ | Phenoxy resin, molecular weight range 45000-55000. |
| VAGH⁴⁾ | High molecular weight, partially-hydrolyzed vinyl chloride/vinyl acetate resin having a composition of approximately 90 percent vinyl chloride, 4 percent vinyl acetate, with a hydroxyl content of approximately 2.3 percent. |
| VROH⁴⁾ | Low molecular weight terpolymer comprised of vinyl chloride, vinyl acetate, and a hydroxyalkyl acrylate. The vinyl chloride portion is approximately 81 percent, and the hydroxyl content is approximately 2 percent. |
| Cymel 327⁵⁾ | Highly methylated, high NH-melamine formaldehyde. |
| Cycat 4045⁵⁾ | Sulfonic acid, amine salt |
| K-cure 1040⁶⁾ | Solution of p-toluene sulfonic acid in isopropanol. |
| Uniplex 260⁷⁾ | Glyceryl Tribenzoate |
| Resamine 797⁸⁾ | Modified melamine crosslinking resin |

| | |
|---|---|
| 1) Bostik, Middleton, MA, US | |
| 2) Creanova Inc., Somerset, NJ, US | |
| 3) Phenoxy Specialties, Rock Hill, SC, US | |
| 4) Union Carbide, Danbury, CT, US | |
| 5) Cytec Industries Inc., West Paterson, NJ, US | |
| 6) King Industries, Norwalk, CT, US | |
| 7) Unitex Chemical Corporation, Greensboro, NC, US | |
| 8) Solutia Inc., St. Louis, MO, US | |

## Claims

1. Process for providing a graphic, decorative label to an article, wherein an ink composition comprising at least one polymeric binder is transferred to a carrier sheet, thus forming a pattern, followed by a step wherein said ink composition is transferred from said sheet to said article, whereby a decoration is formed.

2. Process according to claim 1, which is carried out using a transfer printing process.

3. Process according to claim 1 or 2, wherein said binder comprises an amorphous linear saturated copolyester and/or phenoxy binder.

4. Process according to any of the previous claims, wherein said ink composition is transferred to said sheet by a gravure printing process.

5. Process according to any of the previous claims, wherein said carrier sheet is based on poly(ethylene-terephthalate), (oriented) polypropylene, polyethylene, polystyrene, paper or laminates thereof.

6. Process according to any of the previous claims, wherein said carrier sheet is provided with a release promoting layer, prior to the application of said ink pattern.

7. Process according to any of the previous claims, wherein said ink composition is essentially free of cross-linkers.

8. Process according to any of the previous claims, wherein said decoration is provided without an adhesive layer between said article and said decoration.

9. Process according to any of the previous claims, wherein said decoration is provided without a protective layer on said decoration.

10. Process according to any of the previous claims, wherein said article is a glass article and which process is followed by a step wherein said decoration on said article is heated.

11. Process according to any of the previous claims, wherein said pattern is formed by printing said ink composition in two or more passes on said carrier sheet, wherein said decoration may comprise two or more different colors.

12. Decorated article obtainable by a process according to any of the previous claims.

13. Ink composition for decorating articles comprising:
- an amorphous linear saturated copolyester and/or a phenoxy binder,
- a solvent, and
- one or more pigments,
which ink composition after curing results in a decoration having a glass transition temperature (Tg) of 25 to 100°C.

14. Carrier film provided with a printed pattern, which pattern is obtained by printing the ink composition of claim 11 on said carrier film.
